# FASCICULE DE BREVET EUROPEEN

(11) **EP 0 676 307 B1**
(45) Date de publication et mention de la délivrance du brevet: **23.06.1999**
(21) Numéro de dépôt: 95400798.5
(22) Date de dépôt: 10.04.1995
(51) Int. Cl.: B60K 37/00

(54) **Perfectionnement aux tableaux de bord de véhicules, notamment de véhicules automobiles**
Verbesserungen an Fahrzeug-Armaturenbrettern, insbesondere Kraftfahrzeug-Armaturenbrettern
Improvements in dashboards for vehicles, especially motor vehicles

(30) Priorité: 11.04.1994 FR 9404223
(43) Date de publication de la demande: 11.10.1995
(73) Titulaire: MAGNETI MARELLI FRANCE, 92000 Nanterre (FR)
(72) Inventeur: Guirauton, Pascal, F-95370 Montigny les Cormeilles (FR)
(74) Mandataire: Texier, Christian

(56) Documents cités:
- EP-A- 0 313 739
- EP-A- 0 378 739
- EP-A- 0 505 221
- DE-A- 4 121 248
- PATENT ABSTRACTS OF JAPAN vol. 8 no. 183 (P-296) ,23 Août 1984 & JP-A-59 073787 (CITIZEN TOKEI) 26 Avril 1984,
- PATENT ABSTRACTS OF JAPAN vol. 13 no. 252 (M-836) ,12 Juin 1989 & JP-A-01 058529 (HASHIMOTO FORMING) 6 Mars 1989,

## Description

La présente invention concerne le domaine des tableaux de bord de véhicules, en particulier de véhicules automobiles.

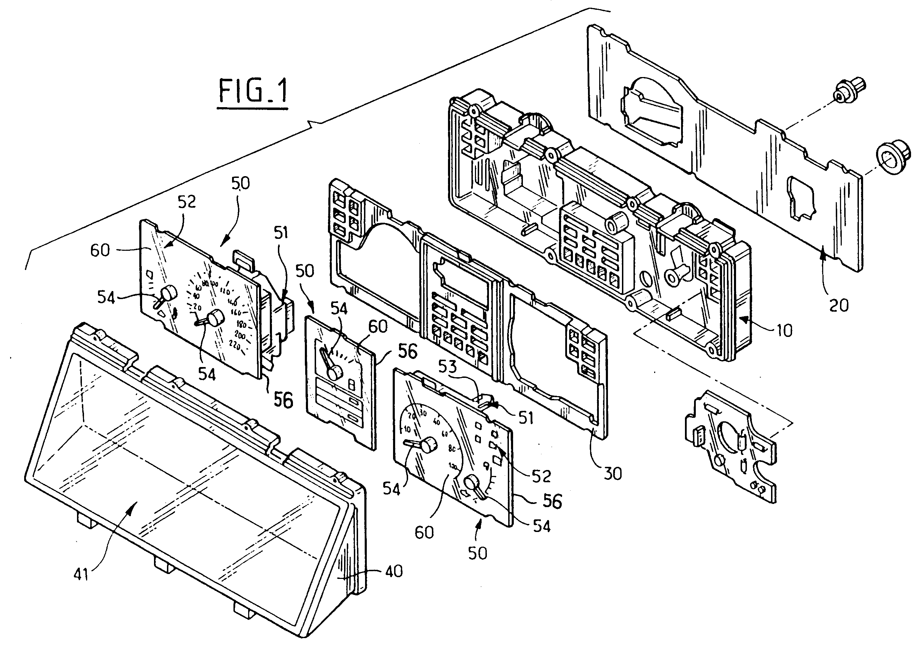

On a représenté sur la figure 1 annexée, en perspective éclatée, la structure générale d'un tableau de bord classique.

On aperçoit sur la figure 1 annexée, un tableau de bord comprenant un boîtier 10, un circuit imprimé 20, un réhaut 30 placé sur la face avant du boîtier 10, une vitre 40 munie d'une vitre transparente 41 placé sur l'avant du réhaut 30 et plusieurs modules indicateurs 50 comprenant chacun une pièce optiquement transparente 56 servant de guide de lumière et un cadran 60.

Le réhaut 30 est formé d'une pièce d'habillage visible qui sert d'entretoise entre la vitre 40 du tableau et la face avant du boîtier 10. Ce réhaut 30 est réalisé fréquemment en acrylonitrile/butadiène/styrène (ABS).

Le plus souvent chaque module indicateur 50 comprend au moins un mouvement de mesure 51 comportant un organe moteur 53 apte à entraîner une aiguille 54 et plusieurs témoins lumineux 52. Les cadrans 60 sont placés en avant des guides de lumière 56, entre ceux-ci et les aiguilles 54. Les cadrans portent diverses indications.

Les cadrans 60 associés aux aiguilles 54 des mouvements de mesure peuvent servir par exemple à visualiser une échelle de compteur de vitesse ou de compte-tour.

Les indications portées sur le cadran 60 peuvent faire l'objet par conséquent d'un grand nombre de variantes.

Généralement les cadrans 60 comprennent des plages translucides éclairées par des sources lumineuses logées dans le boîtier 10, et ce par l'intermédiaire des guides de lumière 56 qui acheminent la lumière en provenance des sources lumineuses vers lesdites plages translucides ainsi que généralement vers les aiguilles 54 réalisées en matériau optiquement transparent à cet effet.

Les pièces 56 formant guide de lumière s'étendent ainsi généralement perpendiculairement à une jupe périphérique du boîtier 10 et servent de support aux appareils indicateurs 51.

Certains tableaux de bord comprennent également un "faux cadran". Dans le domaine automobile, on entend par "faux cadran" une pièce d'habillage située en avant des cadrans 60 et comportant des fenêtres à travers lesquelles sont visibles des plages utiles des cadrans et/ou les témoins indicateurs 52.

Le document EP-A-378739 décrit un tableau de bord pour véhicule automobile comprenant un boîtier, une vitre placée en avant du boîtier, une pièce d'habillage insérée entre la vitre et la face avant du boîtier, au moins un module indicateur et au moins une paroi généralement perpendiculaire à une jupe périphérique du boîtier et qui sert de support au module indicateur, le boîtier, la pièce d'habillage et la paroi support généralement perpendiculaires à la jupe périphérique étant formés d'une pièce unique.

La présente invention a maintenant pour but de perfectionner les tableaux de bord connus.

Ce but est atteint selon la présente invention grâce à un tableau de bord du type défini en revendication 1 annexée, qui est délimiteé sous forme d'un préambule et d'une partie caractérisante par rapport en document EP-A-378 739.

Comme on l'expliquera par la suite, la structure proposée dans le cadre de la présente invention permet de simplifier très notablement les tableaux de bord par rapport aux systèmes antérieurs connus.

Selon une autre caractéristique avantageuse de l'invention, il est prévu des fenêtres dans au moins une zone de liaison entre la paroi support et une jupe périphérique du boitier ou de la pièce d'habillage, le boîtier loge au moins une source lumineuse et le boîtier ou la pièce d'habillage possède, en regard desdites fenêtres, des structures optiquement réflectrices/diffusantes aptes a renvoyer dans la face avant de la paroi support et/ou vers la face avant des appareils indicateurs, la lumière reçue de la source lumineuse, par l'intermédiaire desdites fenêtres.

Selon une autre caractéristique avantageuse de l'invention, la face avant de la paroi support est incurvée, de préférence convexe vers l'avant.

Selon une autre caractéristique avantageuse de l'invention, les aiguilles des appareils indicateurs comprennent des index non rectilignes de contours similaires à l'incurvation de la face avant de la paroi support.

D'autres caractéristiques, buts et avantages de la présente invention apparaîtront à la lecture de la description détaillée qui va suivre, et en regard des dessins annexés donnés à titre d'exemples non limitatifs et sur lesquels :
- la figure 1 précédemment décrite représente une vue schématique en perspective éclatée d'un tableau de bord conforme à l'état de la technique,
- la figure 2 représente une vue en coupe d'un tableau de bord conforme à une première variante de réalisation conforme à la présente invention,
- la figure 3 représente une vue en plan en face avant d'un exemple de tableau de bord conforme à la présente invention, et
- la figure 4 représente une vue schématique en coupe similaire à la figure 2 d'une variante de réalisation de tableaux de bord conformes à la présente invention.

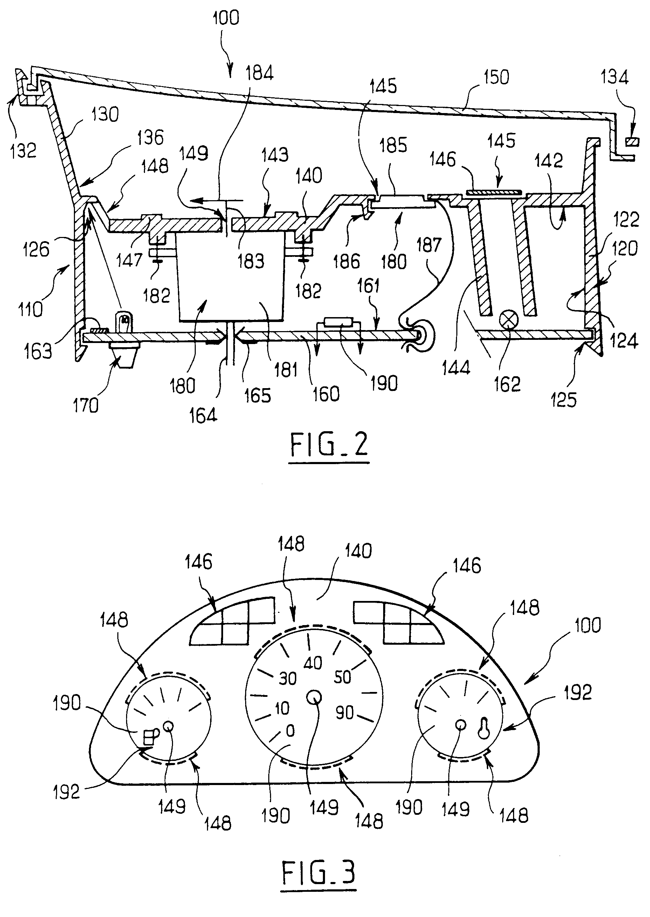

On aperçoit sur les figures 2 et 3 annexées un tableau de bord 100 conforme à la présente invention, comprenant :
- une pièce plastique monobloc 110 qui forme à la fois boîtier 120, pièce d'habillage 130 ou réhaut et paroi support 140,
- une vitre optiquement transparente 150,
- un circuit imprimé 160,
- des sources lumineuses 170, et
- des indicateurs 180.

La pièce 110 est formée de préférence par moulage en matière plastique. La pièce 110 peut faire l'objet de nombreuses géométries. Pour cette raison, elle ne sera pas décrite dans le détail par la suite.

Cette pièce 110 peut être formée à partir d'une matière plastique opaque ou encore à partir d'une matière plastique optiquement transparente pourvue, au moins localement, d'un revêtement, tel qu'une peinture ou un vernis optiquement opaque.

Pour l'essentiel, le boitier 120 est constitue d'une jupe 122 dont le contour est adapté à la géométrie recherchée pour le tableau de bord. Avantageusement et de façon non limitative, la jupe 122 présente un contour globalement oblong.

Il en est de même de préférence pour la pièce d'habillage ou réhaut 130 qui protège sur l'avant le boîtier 120. Comme on l'a indiqué précédemment, cette pièce d'habillage 130 a pour but essentiel de servir d'entretoise entre le boîtier 120 et la vitre 150.

Alors que la jupe 122 du boîtier 120 présente de préférence une section constante sur toute sa hauteur, le cas échéant, comme on le voit sur la figure 2, la pièce d'habillage ou réhaut 130 peut diverger au moins légèrement en éloignement du boîtier 120.

La pièce d'habillage 130 supporte au niveau de son contour d'ouverture avant la vitre 150. Cette vitre 150 est formée d'une plaque optiquement transparente, de polycarbonate ou de poly(méthacrylate de méthyle) ou encore de tout matériau équivalent.

La vitre 150 est fixée sur le contour avant de la pièce d'habillage 130 par tout moyen approprié, par exemple par encliquetage sur des structures complémentaires 132, 134 formées sur le réhaut ou pièce d'habillage 130. De telles structures d'encliquetage 132, 134 ne sont représentées que schématiquement sur les figures annexées. Elles peuvent faire l'objet de nombreuses variantes de réalisation et ne seront donc pas décrites dans le détail par la suite. En variante la vitre 150 peut être fixée sur la pièce d'habillage 130 par tout autre moyen tel que par exemple sertissage, ultra-sons, collage, soudure à chaud.

La paroi support 140 est formée essentiellement d'une paroi généralement plane qui s'étend perpendiculairement à la jupe 122 du boîtier 120 et à la pièce d'habillage 130. La paroi support 140 se raccorde, par sa périphérie sur la surface interne de la jupe 122 du boîtier 120 ou sur la surface interne de la pièce d'habillage 130.

Comme on le voit sur les figures annexées, la paroi 140 porte les indicateurs 180.

De préférence, la paroi support 140 est munie en outre, sur sa face arrière 142 de cheminées 144 ou cloisons annulaires transversales à cette surface arrière 142.

Ces cheminées 144 sont placées, d'une part en regard de témoins lumineux 162 supportés par le circuit imprimé 160, d'autre part en regard de fenêtres 145 formées dans la paroi 140. Ces fenêtres 145 sont pourvues de voyants 146. Ces voyants 146 sont de préférence formés de plages colorées, ou encore sont munis de symboles représentant, de façon connue en soi, la fonction associée au témoin 162 correspondant, par exemple un symbole de réservoir de carburant pour le témoin 162 utilisé pour visualiser la présence d'un niveau minimum de carburant dans le réservoir du véhicule.

En pratique, un tel voyant 146 peut être formé d'une pièce plastique moulée rapportée dans la fenêtre 145 et fixée à ce niveau par tout moyen approprié, tel que par exemple collage ou soudure aux ultrasons, ou encore peut être formé d'une feuille de matière plastique souple, par exemple connue et commercialisée sous la dénomination "Makrofold" pourvue de symboles comme indiqué précédemment.

Selon encore une autre variante, si la pièce 110 est réalisée en matériau optiquement transparent, on peut prévoir d'intégrer le voyant 146 dans la masse de cette pièce moulée 110 et de réaliser les symboles sur la face avant de ce voyant 146 par dépôt d'un revêtement adéquat sous forme d'une peinture ou d'un vernis par exemple.

On aperçoit de tels voyants 146 sur la figure 3. Bien entendu le mode de réalisation représenté sur cette figure ne doit pas être considéré comme limitatif.

De préférence, la paroi 140 est pourvue dans sa zone périphérique de liaison avec la surface interne de la jupe 122 ou avec la surface interne de la pièce d'habillage 130, de fenêtres optiquement transparentes 148.

Lorsque la pièce 110 est réalisée par moulage d'une matière plastique opaque, de telles fenêtres 148 sont formées de logements vides de matière plastique et préservées lors du moulage à l'aide de tiroirs ou d'empreintes complémentaires.

En revanche, lorsque la pièce 110 est formée par moulage d'une matière plastique optiquement transparente, de telles fenêtres 148 peuvent être formées sous forme d'une masse de matière plastique optiquement transparente non recouverte de revêtement opaque par la suite.

En outre, la surface interne 124 du boîtier 120 ou la surface interne 136 de la pièce d'habillage 130 est pourvue de structures optiquement réflectrices/diffusantes en regard des fenêtres 148, lesquelles structures optiquement réflectrices/diffusantes sont adaptées pour renvoyer vers la face avant 143 de la paroi support 140 et/ou vers les appareils indicateurs 180 la lumière reçue en provenance des sources lumineuses 170.

Sur la figure 2 annexée, on a schématisé de telles structures optiquement réflectrices/diffusantes sous la référence 126, sur la face interne 124 du boîtier 120. Cette disposition n'est cependant aucunement limitative.

Par ailleurs, les fenêtres 148 peuvent être placées en aval des structures optiquement réflectrices/diffusantes 126 comme illustré sur la figure 2, ou en amont de ces structures 126.

Ces structures optiquement réflectrices/diffusantes 126 peuvent être formées de tout moyen approprié connu de l'homme de l'art, par exemple de structures venues de moulage sur la face interne 124 du boîtier 120 ou sur la face interne 136 de la pièce d'habillage 130, de structures réflectrices/diffusantes rapportées sur la surface interne 124 du boîtier 120 ou sur la surface interne 136 de la pièce d'habillage 130, de revêtement réflecteur déposé sur sa surface interne, par exemple d'une peinture, encre ou vernis, ou encore d'hologrammes venus du moulage sur ces surfaces internes ou rapportées sur celles-ci, ou des gravures laser.

Selon encore une autre variante de réalisation, on peut réaliser la pièce 110 par moulage d'une matière plastique de couleur blanche, de sorte que l'on obtient automatiquement par contrôle de l'état de surface de la pièce moulée une surface optiquement réflectrice/diffusante.

Sur la figure 3, on a schématisé six plages de fenêtres 148 entourant partiellement deux à deux et en positions sensiblement diamétralement opposées, des indicateurs respectifs à aiguilles 180.

Selon une autre caractéristique avantageuse de l'invention, la section de chaque fenêtre 148 considérée en plan, parallèlement à la paroi support 140, est limitée de sorte qu'un observateur ou conducteur de véhicule ne décèle pas la présence de ces fenêtres 148.

A cet effet, on peut prévoir à l'intérieur du boîtier 120, par exemple sur la face avant 161 du circuit imprimé 160, et en regard des fenêtres 148, des plages 163 de même couleur et aspect que la face avant 143 de la pièce 140.

Eventuellement, comme on l'a schématisé sur la figure 2, la pièce support 140 peut être non plane mais formée de différents niveaux étagés sur la profondeur du tableau. Cette disposition permet d'obtenir différents niveaux d'affichage.

Les indicateurs 180 peuvent faire l'objet de nombreuses variantes de réalisation.

On a schématisé sur la figure 2 un indicateur 181 de type logomètre et un indicateur 185 de type afficheur à cristaux liquides.

Le logomètre 181 est de préférence fixé sur la face arrière 142 de la paroi support 140. Le logomètre 180 peut être fixé à cet effet par tout moyen approprié, par exemple à l'aide de vis 182 ou encore par encliquetage d'étriers ou pièces similaires sur des structures venues de moulage sur la face arrière 142 de la paroi 140.

La paroi 140 est pourvue d'un alésage traversant 149. Cet alésage 149 reçoit en traversée l'axe 183 du logomètre 181 de sorte que l'aiguille 184 liée à cet axe 183 soit disposée et visible sur l'avant de la paroi 140.

L'alimentation électrique du logomètre 181 peut être obtenue par tout moyen approprié, par exemple par l'engagement de broches 164 liées au logomètre 181 sur des pinces 165 ou moyens équivalents liés au circuit imprimé 160.

L'afficheur à cristaux liquides 185 est placé dans une fenêtre 145 formée dans la paroi 140. L'afficheur à cristaux liquides 185 peut être immobilisé dans cette fenêtre 145 par tout moyen approprié, par exemple par encliquetage sur des structures 186 venues de moulage à cet effet sur la face arrière 142 de la paroi support 140 ou encore par tout moyen approprié, par exemple par collage.

En outre, l'afficheur à cristaux liquides 185 est alimenté, à partir du circuit imprimé 160 par tout moyen de liaison approprié, par exemple un circuit imprimé souple 187 comme cela est schématisé sur la figure 2, et/ou par l'intermédiaire d'un empilement de couches élastomères alternativement électriquement conductrices et électriquement isolantes connues et commercialisées généralement sous la dénomination "Zebra".

Le circuit imprimé 160 est un circuit rigide qui supporte, outre les sources lumineuses 170 et témoins lumineux 162 l'ensemble des composants 190 conçu pour assurer la commande des diverses fonctions du tableau de bord.

Le circuit imprimé rigide 160 est fixé et obture le contour arrière de la jupe 122 du boîtier 120. A cet effet, le contour du circuit imprimé 160 est de préférence complémentaire de la section droite de la jupe 122.

Le circuit imprimé 160 est fixé par tout moyen approprié sur le contour arrière de la jupe 122, par exemple par encliquetage dans une gorge 125 formée sur la face interne 124 de la jupe 122 comme représenté sur la figure 2.

Bien entendu, les logomètres 181 peuvent être remplacés par tout mouvement de mesure équivalent, par exemple un moteur pas à pas.

Le cas échéant la paroi support 140 peut être pourvue sur sa face avant 143, autour de chaque alésage 149 recevant l'axe 183 d'un tel mouvement de mesure, et par conséquent au regard de l'aiguille 184 associée, d'une impression, par exemple une impression à chaud ou encore toute impression équivalente, telle que par sérigraphie ou jet d'encre, représentant des indications associées à cette aiguille 184, telle que par exemple une échelle graduée, comme on le voit par exemple sur la figure 3.

Sur cette figure de telles impressions portent la référence générale 190.

Ces impressions 190 peuvent comprendre également des symboles comme cela est schématisé en 192.

Ces impressions 190 peuvent être formées d'un simple revêtement de peinture, ou encore d'un revêtement localement réflecteur/diffuseur, voire par exemple d'un revêtement constitué au moins localement par un matériau photophore, c'est-à-dire comportant des particules d'un matériau apte à provoquer un changement de longueur d'ondes dans la lumière reçue, préférentiellement adaptée pour transformer une lumière incidente d'éclairage invisible en une lumière réémise visible.

Un tel matériau photophore peut être déposé par exemple au niveau des échelles graduées, ou encore des symboles 192 sur les impressions 190.

En variante, les symboles, échelles, chiffres, sigles et équivalents associés aux indicateurs 180 peuvent être formés par moulage en relief ou en creux sur la face avant de la paroi 140, comme on le voit sous la référence 147 sur la figure 2, ces reliefs et/ou creux pouvant être recouverts de vernis, peinture, encre ou équivalent.

Selon encore une autre variante, ces reliefs et/ou creux peuvent être obtenus par usinage, notamment au laser.

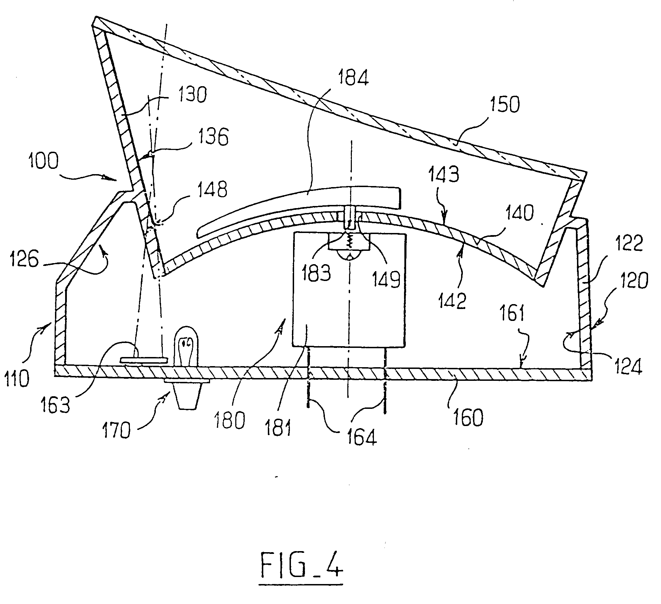

Selon une autre caractéristique avantageuse de l'invention, comme on le voit sur la figure 4, pour optimiser l'éclairage de la face avant 143 de la paroi 140, et des appareils indicateurs 180, à partir des structures optiquement réflectrices/diffusantes 126, la paroi 140 peut être non point plane, mais globalement curviligne, par exemple de courbure continue telle que cylindrique ou sphérique, convexe vers l'avant, c'est-à-dire en direction d'un observateur.

En variante, la face avant 143 de la paroi 140 peut être concave en direction d'un observateur.

Selon encore une autre variante, la face avant 143 de la paroi 140 peut présenter non point une courbure continue, mais être délimitée par différents plans inclinés entre eux.

De préférence, le sommet de la paroi support 140, c'est-à-dire le point de cette paroi support 140 le plus proche de l'observateur est situé sensiblement au centre de ladite paroi 140.

Comme on le voit sur la figure 4, en outre selon l'invention l'index 184 d'aiguille est de préférence non rectiligne mais de contour similaire à l'incurvation de la face avant de la paroi support 140. En d'autres termes, l'index d'aiguilles 184 peut être incurvé, à courbure continue, comme représenté sur la figure 4, ou encore formé de différents segments rectilignes inclinés entre eux.

Selon encore une autre variante conforme à la présente invention, on peut prévoir de réaliser un cadran ou faux cadran venu de moulage avec la pièce 110.

On notera que par rapport aux tableaux de bord antérieurs connus, la présente invention offre notamment l'avantage d'une simplification notable, en particulier par réduction du nombre de pièces, tout particulièrement suppression du guide de lumière classique dans les tableaux de bord commercialisés de nos jours, et éventuellement suppression des cadrans rapportés.

## Revendications

1. Tableau de bord pour véhicules, notamment pour véhicules automobiles comprenant :
- un boitier (120),
- une vitre (150) placée en avant du boitier (120),
- une pièce d'habillage (130) insérée entre la vitre (150) et la face avant du boitier (120),
- au moins un module indicateur (180), et
- au moins une paroi (140) généralement perpendiculaire à une jupe (122) périphérique du boitier et qui sert de support au module indicateur (180),
la paroi support (140) étant pourvue sur sa face arrière (142) d'au moins une cheminée (144) placée en regard d'un témoin lumineux (162) le boitier (120), la pièce d'habillage (130) et la paroi support (140) généralement perpendiculaire à la jupe (122) périphérique du boitier étant formés d'une pièce unique caractérisé par le fait que la pièce unique composant le boîtier (120), la pièce d'habillage (130) et la paroi support (140) est formée par moulage de matière plastique, et la paroi support (140) est munie sur sa face avant, de structures (147) en relief ou en creux formées par moulage et définissant des symboles ou échelles associes au module indicateur (180).

2. Tableau selon la revendication 1, caractérisé par le fait que :
- il est prévu des fenêtres (148) dans au moins une zone de liaison entre la paroi support (140) et la jupe périphérique (122) du boitier (120) ou de la pièce d'habillage (130),
- le boitier (120) loge au moins une source lumineuse (170), et
- le boitier (120) ou la pièce d'habillage (130) possède, en regard desdites fenêtres (148), des structures optiquement réflectrices/diffusantes (126) aptes à renvoyer vers la face avant (143) de la paroi support (140) et/ou vers des appareils indicateurs (180) la lumière reçue des sources lumineuses (170), par l'intermédiaire des fenêtres (148).

3. Tableau selon l'une des revendications 1 ou 2, caractérisé par le fait que la face avant (143) de la pièce support (140) est incurvée.

4. Tableau selon l'une des revendications 1 à 3, caractérisé par le fait que la face avant (143) de la pièce support (140) est convexe en direction d'un observateur.

5. Tableau selon l'une des revendications 3 ou 4, caractérisé par le fait que la face avant (143) de la pièce support (140) présente une courbure continue, par exemple de type cylindrique ou sphérique.

6. Tableau selon l'une des revendications 3 ou 4, caractérisé par le fait que la face avant (143) de la pièce support (140) est formée de différents plans inclinés entre eux.

7. Tableau selon l'une des revendications 3 à 6, caractérisé par le fait que des aiguilles d'appareil indicateur possèdent des index (184) non rectilignes de contour similaire à l'incurvation de la face avant (143) de la paroi support (140).

8. Tableau selon l'une des revendications 1 à 7, caractérisé par le fait que la pièce monobloc (110) formant boîtier (120), pièce d'habillage (130) et paroi support (140) est réalisée en matière plastique optiquement opaque.

9. Tableau selon l'une des revendications 1 à 7, caractérisé par le fait que la pièce monobloc (110) formant boîtier (120), pièce d'habillage (130) et pièce support (140) est réalisée en un matériau plastique optiquement transparent au moins localement pourvu d'un revêtement opaque.

10. Tableau selon l'une des revendications 1 à 9, caractérisé par le fait qu'il est prévu plusieurs plages de fenêtres (148) réparties sur la paroi support (140).

11. Tableau selon la revendication 10, caractérisé par le fait qu'il est prévu deux plages de fenêtres (148) sensiblement diamétralement opposées, associées à chaque appareil indicateur à aiguille (181).

12. Tableau selon l'une des revendications 1 à 11 prise en combinaison avec la revendication 2, caractérisé par le fait que les structures optiquement réflectrices/diffusantes (126) sont choisies dans le groupe comprenant : des structures venues de moulage sur la pièce monobloc (110), des structures rapportées sur cette pièce monobloc (110), des revêtements réflecteurs type peinture, encre ou vernis, ou des hologrammes moulés ou rapportés sur la pièce monobloc (110) ou des gravures laser.

13. Tableau selon l'une des revendications 1 à 12, caractérisé par le fait que la section des fenêtres (148) vues en plan parallèlement à la paroi support (140) est limitée de sorte qu'un observateur ne puisse déceler ces fenêtres.

14. Tableau selon l'une des revendications 1 à 13 prises en combinaison avec la revendication 2, caractérisé par le fait qu'il comprend un revêtement de même couleur et de même aspect que la face avant (143) de la pièce support (140), en regard des fenêtres (148), à l'intérieur du boitier (120), par exemple sur la face avant d'un circuit imprimé (160).

15. Tableau selon l'une des revendications 1 à 14, caractérisé par le fait que la paroi support (140) est non plane pour former différents niveaux d'affichage.

16. Tableau selon l'une des revendications 1 à 15, caractérisé par le fait qu'il comprend un circuit imprimé rigide (160) fixé sur le contour arrière du boitier (120).

17. Tableau selon la revendication 16, caractérisé par le fait que le circuit imprimé (160) est fixé sur le contour arrière du boitier (120) par encliquetage.

18. Tableau selon l'une des revendications 1 à 17, caractérisé par le fait qu'il comprend en outre un faux cadran venu de moulage avec la pièce monobloc (110).

19. Tableau selon l'une des revendications 1 à 18, caractérisé par le fait que la vitre (150) est fixée par encliquetage sur le contour avant de la pièce d'habillage (130).

## Claims

1. A vehicle dashboard, in particular for motor vehicles, comprising:
• a housing (120);
• a glass (150) placed in front of the housing (120);
• a piece of trim (130) inserted between the glass (150) and the front face of the housing (120);
• at least one indicator module (180);
• at least one wall (140) generally perpendicular to a peripheral skirt (122) of the housing and serving as a support for the indicator module (180), the support wall (140) being provided on its rear face (142) with at least one chimney (144) placed in register with an indicator light (162); and
• the housing (120), the piece of trim (130), and the support wall (140) that is generally perpendicular to the peripheral skirt (122) of the housing being made as a single piece,
the dashboard being characterized by the fact that the single piece constituting the housing (120), the piece of trim (130), and the support wall (140) is made by molding plastics material, and
the support wall (140) is provided on its front face with projecting or indented structures (147) formed by molding and defining symbols or scales associated with the indicator module (180).

2. A dashboard according to claim 1, characterized by the fact that:
• it is provided with windows (148) in at least one link zone between the support wall (140) and the peripheral skirt (122) of the housing (120) or of the piece of trim (130);
• the housing (120) houses at least one light source (170); and
• the housing (120) or the piece of trim (130) possesses, in register with said windows (148), optically reflecting/diffusing structures (126) suitable for deflecting light towards the front face (143) of the support wall (140) and/or towards indicator devices (180), said light being received from the light sources (170) via the windows (148).

3. A dashboard according to claim 1 or 2, characterized by the fact that the front face (143) of the support piece (140) is curved.

4. A dashboard according to any one of claims 1 to 3, characterized by the fact that the front face (143) of the support piece (140) is convex towards an observer.

5. A dashboard according to claim 3 or 4, characterized by the fact that the front face (143) of the support piece (140) presents continuous curvature, e.g. of the cylindrical or spherical type.

6. A dashboard according to claim 3 or 4, characterized by the fact that the front face (143) of the support piece (140) is constituted by various mutually inclined planes.

7. A dashboard according to any one of claims 3 to 6, characterized by the fact that the pointers of the indicator device possess needles (184) that are not rectilinear, being of outline similar to the curvature of the front face (143) of the support wall (140).

8. A dashboard according to any one of claims 1 to 7, characterized by the fact that the single piece (110) forming the housing (120), the piece of trim (130), and the support wall (140) is made of optically opaque plastics material.

9. A dashboard according to any one of claims 1 to 7, characterized by the fact that the single piece (110) forming the housing (120), the piece of trim (130), and the support wall (140) is made of a plastics material that is optically transparent, at least locally, and that is provided with an opaque covering.

10. A dashboard according to any one of claims 1 to 9, characterized by the fact that is provided with a plurality of window areas (148) distributed over the support wall (140).

11. A dashboard according to claim 10, characterized by the fact that is is provided with two substantially diametrically opposite window areas (148) associated with each indicator device having a pointer (181).

12. A dashboard according to any one of claims 1 to 11 taken in combination with claim 2, the dashboard being characterized by the fact that the optically reflecting/diffusing structures (126) are selected from the group comprising: structures integrally molded with the single piece (110); structures applied to said single piece (110); reflecting coatings of the paint, ink, or varnish type; and holograms that are molded in or fitted to the single piece (110) or that are laser etchings.

13. A dashboard according to any one of claims 1 to 12, characterized by the fact that the section of the windows (148) seen in plan view parallel to the support wall (140) is limited so that an observer cannot see the windows.

14. A dashboard according to any one of claims 1 to 13 in combination with claim 2, characterized by the fact that it has a coating of the same color and the same appearance as the front face (143) of the support piece (140) in register with the windows (148) inside the housing (120), e.g. on the front face of a printed circuit (160).

15. A dashboard according to any one of claims 1 to 14, characterized by the fact that the support wall (140) is not a plane, thereby forming different display levels.

16. A dashboard according to any one of claims 1 to 15, characterized by the fact that it includes a rigid printed circuit (160) fixed to the rear outline of the housing (120).

17. A dashboard according to claim 16, characterized by the fact that the printed circuit (160) is fixed to the rear outline of the housing (120) by snap-fastening.

18. A dashboard according to any one of claims 1 to 17, characterized by the fact that it further comprises a false dial integrally molded with the single piece (110).

19. A dashboard according to any one of claims 1 to 18, characterized by the fact that the glass (150) is fixed to the front outline of the piece of trim (130) by snap-fastening.

## Patentansprüche

1. Armaturenbrett für Fahrzeuge, insbesondere für Karftfahrzeuge mit:
- einem Gehäuse (120)
- einer vorne auf dem Gehäuse (120) angeordneten Scheibe (150)
- einem zwischen der Scheibe (150) und der Vorderseite des Gehäuses (120) eingesetzten Verkleidungsteil (130)
- zumindest einem Anzeigemodul (180), und
- zumindest einer Wand (140), welche allgemein senkrecht zu einem Umfangsmantel (122) des Gehäuses liegt und als Stütze für das Anzeigemodul (180) dient, wobei die Stützwand (140) auf ihrer Rückseite (142) mit zumindest einem Schacht (144) ausgestattet ist, welcher gegenüber einer Kontrolleuchte (162) angeordnet ist, wobei das Gehäuse (120), das Verkleidungsteil (130) und die allgemein senkrecht zu dem Umfangsmantel (122) des Gehäuses liegende Stützwand (140) aus einem einzigen Teils gebildet sind, dadurch gekennzeichnet, daß das einzige Teil, welches das Gehäuse (120), das Verkleidungsteil (130) und die Stützwand (140) bildet, durch Spritzguß aus Kunststoffmaterial hergestellt wird, und wobei die Stützwand (140) auf ihrer Vorderseite mit Relief oder Aushöhlungsstrukturen versehen ist, welche durch Abguß gebildet werden und dem Anzeigemodul (180) zugeordnete Symbole oder Skalen definieren.

2. Armaturenbrett gemäß Anspruch 1, dadurch gekennzeichnet, daß:
- Fenster (148) in wenigstens einem Verbindungsbereich zwischen der Stützwand (140) und dem Umfangsmantel (122) des Gehäuses (120) oder dem Verkleidungsteil (130) vorgesehen sind,
- das Gehäuse (120) wenigstens eine Lichtquelle (170) lagert, und
- das Gehäuse (120) oder das Verkleidungsteil (130) gegenüber den Fenstern (148) optisch reflektierende/diffundierende Strukturen (126) besitzt, welche dafür eingerichtet sind, das von den Lichtquellen (170) empfangene Licht mittels der Fenster (148) zu der Vorderseite (143) der Stützwand (140) und/oder zu den Anzeigegeräten (180) hin zurückzuwerfen.

3. Armaturenbrett gemäß einem der Ansprüche 1 oder 2, dadurch gekennzeichnet, daß die Vorderseite (143) des Stützteils (140) gebogen ist.

4. Armaturenbrett gemäß einem der Ansprüche 1 bis 3, dadurch gekennzeichnet, daß die Vorderseite (143) des Stützteils (140) konvex in Richtung eines Betrachters ist.

5. Armaturenbrett gemäß einem der Ansprüche 3 oder 4, dadurch gekennzeichnet, daß die Vorderseite (143) des Stützteils (140) eine durchgehende Krümmung, z.B. der zylindrischen oder kugelförmigen Art aufweist.

6. Armaturenbrett gemäß einem der Ansprüche 3 oder 4, dadurch gekennzeichnet, daß die Vorderseite (143) des Stützteils (140) aus verschiedenen zueinander geneigten Ebenen gebildet ist.

7. Armaturenbrett gemäß einem der Ansprüche 3 bis 6, dadurch gekennzeichnet, daß die Nadeln der Anzeigegeräte nicht geradlinige Zeiger (184) mit einem ähnlichen Umriß wie die Krümmung der Vorderseite (143) der Stützwand (140) aufweisen.

8. Armaturenbrett gemäß einem der Ansprüche 1 bis 7, dadurch gekennzeichnet, daß das Teil aus einem Block (110), welches das Gehäuse (120), das Verkleidungsteil (130) und die Stützwand (140) bildet, aus optisch lichtundurchlässigem Kunststoffmaterial hergestellt ist.

9. Armaturenbrett gemäß einem der Ansprüche 1 bis 7, dadurch gekennzeichnet, daß das Teil aus einem Block (110), welches das Gehäuse (120), das Verkleidungsteil (130) und die Stützwand (140) bildet, aus einem optisch durchsichtigen Kunststoffmaterial hergestellt ist, welches wenigstens örtlich mit einer lichtundurchlässigen Beschichtung versehen ist.

10. Armaturenbrett gemäß einem der Ansprüche 1 bis 9, dadurch gekennzeichnet, daß mehrere über die Stützwand (140) verteilte Fensterbereiche (148) vorgesehen sind.

11. Armaturenbrett gemäß Anspruch 10, dadurch gekennzeichnet, daß zwei praktisch diametral entgegengesetzte Fensterbereiche (148) vorgesehen sind, welche jedem Anzeigegerät mit Nadel (181) zugeordnet sind.

12. Armaturenbrett gemäß einem der Ansprüche 1 bis 11 in Kombination mit Anspruch 2, dadurch gekennzeichnet, daß die optisch reflektierenden/diffundierenden Strukturen (126) aus der Gruppe gewählt sind, welche aufweist: Strukturen, welche durch Spritzguß auf dem Teil aus einem Block (110) gebildet sind, auf diesem Teil aus einem Block (110) aufgesetzte Strukturen, reflektierende Beschichtungen der Art Farbe, Tinte oder Lack, oder auf dem Teil aus einem Block (110) geformte oder aufgesetzte Hologramme oder Lasergravuren.

13. Armaturenbrett gemäß einem der Ansprüche 1 bis 12, dadurch gekennzeichnet, daß der Bereich der Fenster, welche in der Ebene parallel zu der Stützwand (140) zu sehen sind, begrenzt ist, so daß ein Betrachter diese Fenster nicht wahrnehmen kann.

14. Armaturenbrett gemäß einem der Ansprüche 1 bis 13 in Kombination mit Anspruch 2, dadurch gekennzeichnet, daß es eine Beschichtung mit derselben Farbe und demselben Aussehen wie die Vorderseite (143) des Stützteils (140) gegenüber den Fenstern (148) innerhalb des Gehäuses (120), z.B. auf der Vorderseite einer gedruckten Schaltung (169), aufweist.

15. Armaturenbrett gemäß einem der Ansprüche 1 bis 14, dadurch gekennzeichnet, daß die Stützwand (140) nicht eben ist, um verschiedene Anzeigeebenen zu bilden.

16. Armaturenbrett gemäß einem der Ansprüche 1 bis 15, dadurch gekennzeichnet, daß es eine steife gedruckte Schaltung (160) aufweist, welche auf dem hinteren Umriß des Gehäuses (120) befestigt ist.

17. Armaturenbrett gemäß Anspruch 16, dadurch gekennzeichnet, daß die gedruckte Schaltung (160) auf dem hinteren Umriß des Gehäuses (120) durch Einrasten befestigt ist.

18. Armaturenbrett gemäß einem der Ansprüche 1 bis 17, dadurch gekennzeichnet, daß es außerdem eine falsche Skala aufweist, welche durch Formpressen mit dem Teil aus einem Block (110) gebildet wurde.

19. Armaturenbrett gemäß einem der Ansprüche 1 bis dadurch gekennzeichnet, daß die Scheibe (150) durch Einrasten auf dem vorderen Umriß des Verkleidungsteils (130) befestigt ist.
